(19) Europäisches Patentamt
European Patent Office
Office européen des brevets

(11) **EP 1 109 308 B1**

(12) **EUROPEAN PATENT SPECIFICATION**

(45) Date of publication and mention
of the grant of the patent:
**10.10.2007 Bulletin 2007/41**

(51) Int Cl.:
*H02P 25/08* (2006.01)      *H02P 21/00* (2006.01)

(21) Application number: **00310807.3**

(22) Date of filing: **05.12.2000**

(54) **Switched reluctance machine control**

Regelung für eine geschaltete Reluktanzmaschine

Commande d'un machine à reluctance commutée

(84) Designated Contracting States:
**DE FR GB IT**

(30) Priority: **17.12.1999 GB 9929994**

(43) Date of publication of application:
**20.06.2001 Bulletin 2001/25**

(73) Proprietor: **SWITCHED RELUCTANCE DRIVES LIMITED**
**Harrogate,**
**North Yorkshire HG3 1PR (GB)**

(72) Inventor: **Marcinkiewicz, Joseph Gerald**
**St.Charles,**
**Missouri, MO 63304 (US)**

(74) Representative: **Hale, Peter et al**
**Kilburn & Strode**
**20 Red Lion Street**
**London WC1R 4PJ (GB)**

(56) References cited:
**EP-A- 0 532 350**      **EP-A- 0 573 198**

• **BAGATI A ET AL: "HIGH-PERFORMANCE CONTROL OF SYNCHRONOUS RELUCTANCE MOTORS" IEEE TRANSACTIONS ON INDUSTRY APPLICATIONS, IEEE INC. NEW YORK, US, vol. 33, no. 4, 1 July 1997 (1997-07-01), pages 983-991, XP000735355 ISSN: 0093-9994**
• **PATENT ABSTRACTS OF JAPAN vol. 004, no. 157 (E-032), 4 November 1980 (1980-11-04) & JP 55 106056 A (FUJI ELECTRIC CO LTD;OTHERS: 01), 14 August 1980 (1980-08-14)**
• **FRATTA A ET AL: "A RELUCTANCE MOTOR DRIVE FOR HIGH DYNAMIC PERFORMANCE APPLICATIONS" IEEE TRANSACTIONS ON INDUSTRY APPLICATIONS, IEEE INC. NEW YORK, US, vol. 28, no. 4, 1 July 1992 (1992-07-01), pages 873-879, XP000306584 ISSN: 0093-9994**
• **PATENT ABSTRACTS OF JAPAN vol. 005, no. 007 (E-041), 17 January 1981 (1981-01-17) & JP 55 136890 A (FUJI ELECTRIC CO LTD), 25 October 1980 (1980-10-25)**
• **P.G. BARRAS, B.C. MECROW: "flux and torque control of switched reluctance machines" IEE PROCEDINGS, vol. 145, no. 6, 6 November 1998 (1998-11-06), pages 519-527,**
• **C. WEINER: "Flux-linkage control of fully-pitched switched reluctance motors" pages 1-9, EPE 99, LAUSANNE**

**Description**

This invention relates to the control of electronically switched, brushless machines, such as switched reluctance machines, permanent magnet machines and hybrids thereof.

The typical switched reluctance machine, for example, comprises a rotor, defining rotor poles, a stator defining stator poles, and a set of windings arranged in relation to the stator poles to define one or more phases. In a reluctance machine, energisation of one or more phase windings sets up a magnetic flux in the associated stator poles, urging the rotor into a position of minimum reluctance. Timing the sequential energisation of the windings according to rotor position induces rotor movement. Switched reluctance machines are well known. More detail is provided in the paper 'The Characteristics, Design and Applications of Switched Reluctance Motors and Drives' by Stephenson and Blake, presented at the PCIM '93 Conference and Exhibition at Nurnberg, Germany, June 21-24, 1993 which is incorporated herein by reference. As is well known in the art, these machines can be operated as motors or generators simply by altering the timing of the application of the excitation to the phase windings.

As explained in the above paper, the method of torque production in a switched reluctance machine is quite different from that in conventional machines, e.g. induction or synchronous machines, which are operated by rotating waves of magneto-motive force (mmf) and in which the torque is produced by the interaction of a magnetic field with a current flowing in a conductor. Such machines are known as 'electromagnetic' machines and encompass, e.g., so-called brushless DC machines in which the current is in stator coils and the field is produced by permanent magnets on the rotor. By contrast, switched reluctance machines are purely 'magnetic' machines, where the torque is produced solely by the magnetic field as the reluctance of the magnetic circuit changes. It follows that the methods of controlling the two types of machine are quite different, since the control is related to the method of torque production. In general, the control methods used for conventional, sinusoidally fed machines are quite inappropriate for switched reluctance machines.

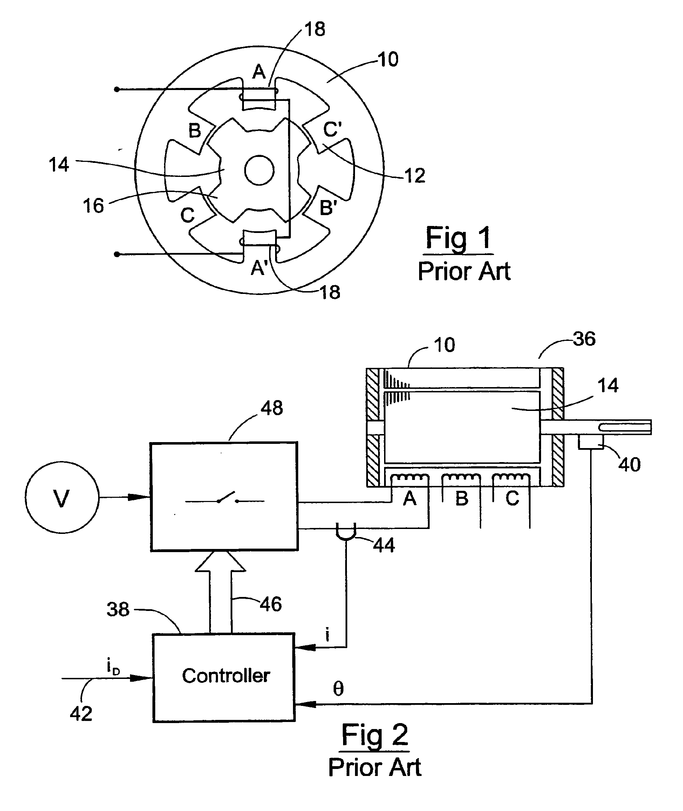

Figure 1 shows a typical switched reluctance machine in cross section. In this example, the stator 10 has six stator poles 12, and the rotor 14 has four rotor poles 16. Each stator pole carries a coil 18. The coils on diametrically opposite poles are connected in series to provide three phase windings. Only one phase winding is shown, for clarity. The control of the switched reluctance machine can be achieved in a variety of ways. The machine could be controlled in an open-loop fashion, i.e. as commonly used for stepping motors. In this regime, the phase windings in the machine are sent pulses in turn and it is assumed that the rotor lines up with each pair of stator poles in turn, i.e. the position of minimum reluctance for that phase which is excited. Of course, because the system is open-loop, there are no means of knowing if the rotor has moved or not. To remove this uncertainty, it is conventional to use a rotor position detection scheme of some sort which provides a signal representative of rotor position. The excitation can then be applied as a function of the position. Such machines are often referred to as "rotor position switched machines".

Since current in the windings is relatively easy to measure, closed-loop current control is commonly accomplished by monitoring and controlling the energising current in the windings. However, the desired output of the machine is usually torque, position or speed, and current has a highly non-linear relationship to all of these. The result is that current control techniques generally have inaccuracies in the output, such as torque ripple, position error or speed error.

A typical switched reluctance drive is shown in Figure 2. In this example, the machine 36 corresponds to that shown in Figure 1. The three phase windings, A, B and C are switched onto a d.c. supply V by a set of power electronic switches 48. The moments at which the switches operate are determined by the controller 38, which may be implemented either in hardware or in the software of a microcontroller or digital signal processor. The firing signals are sent to the switches via a data bus 46. Closed loop current feedback is provided by sensing the phase currents by one or more current sensors 44 and feeding back signals proportional to phase current. The control algorithms often include a proportional (P), proportional-plus-integral (P+I), time optimal, feedback linearised, proportional/integral/derivative (PID) function, or one of many others as is well understood in the art. It is also common for an outer control loop of position or speed to be provided by feeding back a rotor position signal from a position detector 40.

In operation, a current demand $i_D$ on line 42 is provided to the controller and this regulates the current in the windings, according to the particular control scheme adopted, to produce the desired output from the machine. Those skilled in the art will be familiar with the many variations of current controllers which exist, each of which has its own merits, but all of them suffer from the problems of non-linearity between the controlled variable and the machine output described above.

It has been recognised by the inventor that the more fundamental control variable in a switched reluctance machine is the flux which is set up in the magnetic circuit in the machine when a phase winding is energised. The flux is directly responsible for the force which acts on the rotor to urge it to a position of minimum reluctance, i.e. to pull the rotor round, with respect to the energised stator poles. This invention uses closed-loop real-time determination and control of flux to achieve much better performance from the machine than has hitherto been possible with closed-loop control of current.

In practice, it has been realised, current control is particularly sensitive to variations in the machine. In contrast it has been found that flux control is substantially dependent only on the flux-causing voltage across the phase winding(s). Thus, it is found to be more tolerant of these variations in the machine. Many of the practical uncertainties arising from the manufacturing variations to which current control is prone are simply avoided.

In the paper 'Torque Control of Switched Reluctance Drives' by P.G. Barrass and B.C. Mecrow, ICEM'96 Proceedings, International Conference on Electrical Machines, 10-12 September 1996, Vigo, Spain, Vol 1, pp 254 - 259, there is a proposal to provide a torque control by reference to flux linkage reference waveforms using a look-up table that stores fixed values of flux ramps for co-ordinates of supply voltage, phase current and rotor position. The flux values and co-ordinates are specific to a particular motor. At any instant the pre-stored values of flux and torque are chosen from measurements of phase current and the stored machine data. There is a fixed relationship between the monitored variables and the values of the flux waveforms in the look-up table that are used to produce an output for a given motor.

The paper by Vagati et al (IEEE Transactions on Industry Applications, IEEE Inc., New York, US (01-07 1997), 33(4), 983-991) and the paper by Fratta et al (IEEE Transactions on Industry Applications, IEEE Inc., New York, US (01-07 1992), 28(4), 873-879) disclose systems for flux and current based vector control of synchronous reluctance motors.

EP-A-0573198 discloses a system and method for sensorless rotor position measurement which uses sampled measurements of current and flux, compares these measurements with stored values and calculates an error value in order to predict the instant the rotor will reach the next reference position.

It has been recognised by the inventor that the machine operating characteristic that is relatively easily determined, and that relates directly to the flux, is the voltage across the phase winding.

The invention is set out in claims 1 and 16. Optional features of embodiments of the invention are set out in the dependent claims.

According to the invention the machine, which can be run as a motor or a generator, derives the feedback signal indicative of the flux from the flux causing voltage. The flux causing voltage is estimated by a state observer arrangement.

The voltage across a winding must be integrated to derive the actual flux signal as will be explained. A disadvantage of this is that the time between integrator resets increases with decreasing speed of the rotor, leading to inaccuracies which, of course, become intolerable particularly at standstill. Thus, it is also possible to estimate the flux from the current in the phase winding using a current model of the machine, for example, according to a state observer arrangement. While there is no integral term in deriving the flux from a current model, and it is therefore unaffected at low speeds, it makes reference to the angular position of the rotor with respect to the stator and is therefore less accurate at higher speeds.

The current model is not sensitive to phase resistance, so the current model can be usefully arranged to dominate at "low speed" when little voltage is necessary to generate the required flux linkage. If the system is adaptive, the phase resistance can be more easily estimated at low speed while the observer is relying on the current model. At high speed the current model will be less accurate due to angle measurement errors being magnified as the speed increases. More applied phase voltage is required to generate the necessary flux linkage over the shorter phase cycle time. The voltage model is not sensitive to angle measurement error and is less sensitive to phase resistance at high speed. The voltage model (the integral with respect to time of the difference between the voltage applied to a phase and the voltage drop across that phase resistance) will also model complex effects like mutual inductance between phases in a simple manner. The total phase flux linkage is derived no matter which phase mmf is responsible.

The invention enables direct flux control of the machine which has been found to be more accurate and is more amenable to on-line adaptation than the current-based control previously used. It uses a real-time determination of flux.

Preferably, the flux controller further includes means for timing the control signals for actuating the excitation means.

The present invention can be put into practice in various ways, some of which will now be described by way of example with reference to the accompanying drawings in which: -

Figure 1 is a schematic diagram of a known switched reluctance machine;
Figure 2 is a schematic diagram of a known closed loop current controller for a switched reluctance machine;
Figure 3 is a schematic block diagram of a control system for a switched reluctance machine incorporating an embodiment of the invention;
Figure 4 is a radial cross-section of another embodiment of a reluctance machine according to the invention;
Figure 5 is a schematic block diagram of a further embodiment of a control system in accordance with the invention;
Figure 6 is a schematic block diagram of part of the system of Figure 5 according to one particular form of the invention;
Figure 7 is a more detailed schematic block diagram of Figure 6 for a three phase machine;
Figure 8 is a more detailed schematic block diagram of an alternative form of Figure 6; and
Figure 9 is a plot of the gain of the current estimator control law with motor speed.

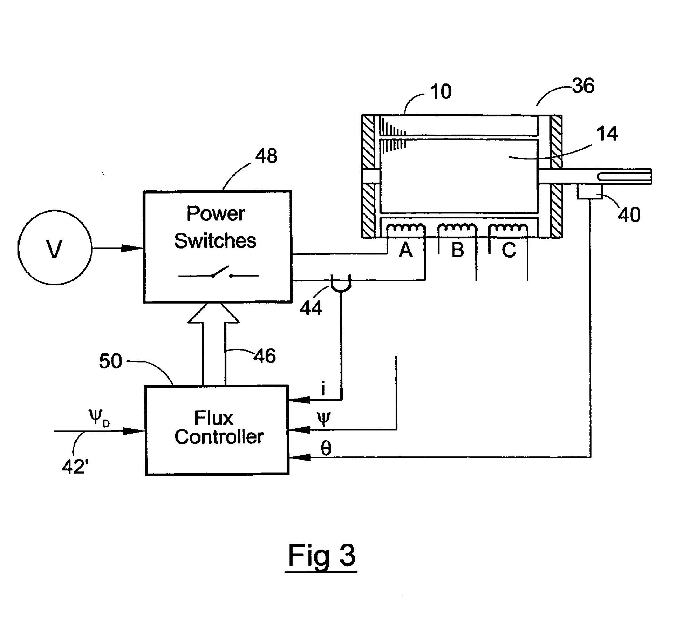

Referring to Figure 3, a first embodiment of a switched reluctance drive system according to the invention includes a switched reluctance machine 36 having a laminated stator 10 and a laminated rotor 14 in relation to which is arranged a rotor position transducer (RPT) 40. A flux controller 50 produces firing signals for actuating power electronic switches 48 for controlling the energisation of the phase windings A, B and C associated with the stator 10. The schematically illustrated connection of only one phase winding is shown for the sake of clarity, but each phase is independently excitable by actuation of the switches. In an alternative embodiment, the excitation for the windings is provided by an amplifier of known type. It will also be appreciated that each phase winding will have associated with it a current transducer 44. Only one is shown for the sake of clarity. The input 42' to the flux controller 50 is a signal representing the desired flux $\psi_D$ in the machine to produce a desired output. In operating the machine as a motor, the desired output is torque, speed or position. In operating the machine as a generator, the desired output is electrical power. The flux demand signal can simply be in the form of a scaled voltage input representing (e.g.) the torque or speed range of the machine.

The flux controller of Figure 3 is quite different in operation from the controller of Figure 2. Instead of a current demand controlling the output of the machine, the output is controlled directly by a flux demand: instead of current being the principal parameter fed back to correct the output, flux is now the principal controlled parameter. This is quite different from all known practicable controllers for switched reluctance machines.

In the flux controller 50 of Figure 3, the flux feedback signal $\psi$ is compared with the demanded flux 42' to produce an error signal. The flux controller can follow any one of a range of control laws, such as proportional, proportional-plus-integral, proportional/integral/derivative, time optimal, feedback linearised action, etc. as described previously. The machine 36 also has a conventional RPT 40, whose output $\theta$ provides timing information to the flux controller 50 in conventional manner. Alternative embodiments use so-called sensorless position detection systems which estimate position from other parameters of the machine, as is known in the art. The flux controller 50 may also receive a current signal i from the current transducer 44, though this is not used in the manner of a conventional current controller: rather, it is used simply to provide overall monitoring of current, to ensure that it stays within a predetermined safe level, and/or feed-forward $I_n * R_n$ compensation. The flux controller 50 produces firing signals for the switching devices 48 that control energisation of the phase windings.

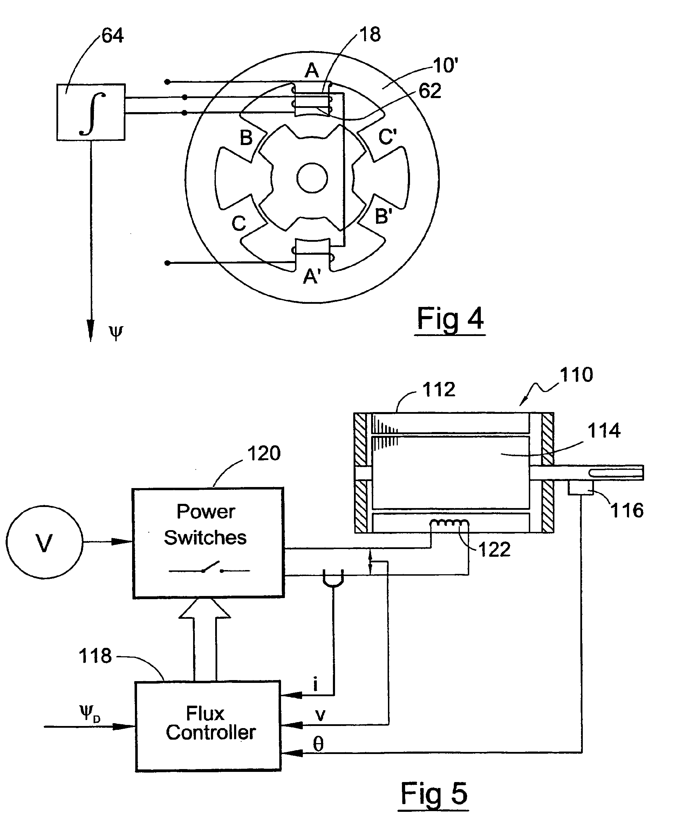

An alternative method of deriving the flux signal $\psi$ is shown in Figure 4, in which one or more stator poles of each phase winding 18 carries an additional winding which acts as a search coil 62. The search coil 62 may be wound independently of the phase winding, as shown schematically in Figure 5, or it may be wound with it in bifilar fashion. In either case, it will have a voltage induced in it when the phase winding is excited which, when integrated with respect to time by an integrator 64, gives a signal directly proportional to the flux linking the search coil 62. The integrated signal is fed back to the flux controller 50 as the flux feedback signal $\psi$.

Figure 4 shows one search coil 62 for the phase winding, but it will be recognised that a system with one coil on each pole could be used or, alternatively, the coil(s) could be placed around some other part of the magnetic circuit, e.g. around the yoke of the stator core, on a section between two stator poles, where it is able to sense the flux in the magnetic circuit of the machine.

It will be realised that the embodiments shown in Figures 3 and 4 are illustrative only and that other methods of producing the flux feedback signal $\psi$ could be used. The main requirement is that the signal $\psi$ used by the flux controller is proportional to the flux in the magnetic path associated with the phase winding being excited.

From the above, it will be apparent to those skilled in the art that real-time, flux-based, closed-loop control can be applied with benefit to any switched reluctance machine with any number of poles and phases. Accordingly, the above description of embodiments is made by way of example and not for the purposes of limitation.

Referring to Figure 5, in another form of the invention a switched reluctance drive comprises a switched reluctance machine 110 having a stator 112 and a rotor 114 in relation to which is arranged a rotor position transducer (RPT) 116. The RPT 116 provides rotor position signals $\theta$ to a flux controller 118 which produces firing signals for actuating a switching circuit 120 for controlling the energisation of the windings 122 associated with the stator. The flux controller 118 is also provided with current and supply voltage signals i and v from the machine.

The flux controller must be able to estimate, or 'model' the flux in the machine, given the quantities of voltage, and/or current and rotor position. It is possible to achieve this in a variety of ways, two of which will be described in detail. Firstly, the flux can be modelled from a knowledge of the voltage applied to the phase and the time for which it is applied. This is called hereafter the 'voltage model'. It can be refined by introducing secondary terms involving current and winding parameters, but essentially is driven by the applied voltage. Secondly, the flux can be estimated from a knowledge of the current in the winding and the rotor position. This is called hereafter the 'current model'. While both of these models can take different analytical or numerical forms, preferred implementations will be described below.

According to this embodiment of the invention, the flux controller 118 uses a state observer to model flux linkage, the observer including both a current model and a voltage model of the flux. It is found that the current model becomes less accurate at high speeds because of increased rotor position sensor error at high speed. The voltage model involves cyclical integration of voltage with respect to time and is, therefore, susceptible to errors at zero and low speeds at which the reset of the integration term occurs increasingly infrequently, leading to drift. Thus, the frequency response of the current model part of the flux estimating system of the embodiment is arranged so that it is dominant at zero and low speeds while the voltage model part is dominant at higher speeds.

The flux ψ in a winding is proportional to the integral of the emf, E, applied to the winding with respect to time:

$$\psi = \int E \, dt$$

Therefore to control accurately the flux in a switched reluctance machine in real time it has been found that it is beneficial to derive a value for the voltage E producing the flux ψ. To do this, a search coil or bifilar winding can be arranged in relation to each phase winding, as described above in relation to Figure 4.

An alternative approach is to develop an estimate for the voltage E which can be based on V, i and a thermal model of, or electrical data for, the winding resistance R. This is less intrusive than a search coil or bifilar winding. Since V is the voltage applied to the phase winding, i is the phase current and R is the phase resistance,

$$E = V - iR$$

so

$$\psi = \int [V - iR] \, dt$$

Although if the resistance of winding R drifts then the flux value drifts, this is still useful method of estimating the flux and, in any case, a thermal model can be set up to track any changes in R. However, in many applications it will be acceptable to choose a single value of R associated, for example, with a set of standard operating conditions or a single operating point. This voltage model will also observe complex effects like mutual inductance between phases in a simple manner. The total phase flux linkage is derived no matter which phase mmf is responsible.

As with any measurement system involving an integrator, care must be taken either to prevent long term drift in the integrator or to avoid depending on its output when drift is likely to be a problem. In this particular case, it is of most concern at or near zero machine speed because the integrator has a significant period between integrator resets during which drift may occur, and no reset at all at zero speed.

It is therefore preferable not to rely on the estimate produced by the voltage model at low speed, but to arrange for a more reliable current model to be used.

$$\psi = \int V - iR \, dt$$

$$\text{Flux } \Phi = (Ni)/\Re \qquad \text{(where } \Re \text{ is the reluctance of the magnetic circuit and N is the number of turns in the phase winding)}$$

$$d/dt \, (\text{Flux linkage } \psi) = V - iR$$

Thus
and

$$i = \Re * \Phi / N$$

$$\Phi = \int \ [(V/N)\text{-}R*\,\Phi*\Re/N^2]dt$$

$$\dot{\hat{\Phi}} = (V/N)\text{-}R*\,\hat{\Phi}*\Re/N^2,$$    the derivative of the flux estimate with respect to time. $\dfrac{\Re*R}{N^2}$ varies with rotor angle and temperature

$\dfrac{V}{N}$ is the true control input to the motor.

Using a combination of the voltage and current models, a flux estimator equation can be written:

$$\dot{\hat{\Phi}} = (V/N)\text{-}R*\,\hat{\Phi}*\Re/N^2 + Kobs(\omega)*(i\text{-}\hat{\Phi}*\Re/N)$$

Where Kobs is the "observer gain" for the current model which is a function of rotor angular velocity $\omega$.

$R*\,\hat{\Phi}*\Re/N^2$ disappears with the use of a search coil or a bifilar winding.

Now, Kobs is a time domain non-linear function which is difficult to derive, but at high speed the value of Kobs will go to zero, whereas the $\hat{\Phi}$ term contributes less at low speed. Kobs becomes large at low speed and dominates the observer as Kobs is based in the rotor angle domain. Thus, this embodiment of the invention decouples the time and angle domain terms by splitting the estimator between current and voltage models and allows each to dominate at different machine speed ranges.

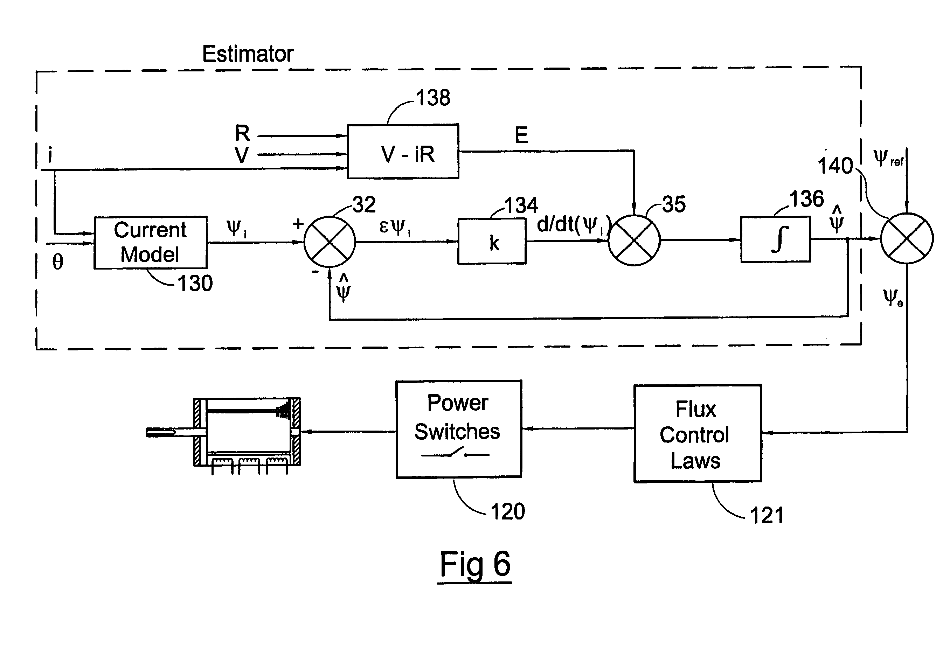

This basic technique of using both models in a closed-loop controller is shown in Figure 6, in which a current model 130 has inputs of phase current i and rotor position $\theta$. The totality of the estimator is indicated in Figure 6. The output of the current model 130 is an estimate of flux $\psi_i$, which is fed to a summing junction 32 in which it is combined with the flux estimate $\hat{\psi}$ to produce a difference value $\epsilon\psi_l$ which is provided to a gain matrix 134. In this embodiment the gain matrix 134 is a proportional-plus-integral (P+I) observer gain matrix (error convergence law). The observer gain matrix (error convergence law) can take other forms, such as a PD, PID, hysteretic or predictive controller as will be apparent to the skilled person.

Block 138 receives inputs of phase voltage V, phase current i and estimated winding resistance R and computes the estimate of emf E. (Note that, strictly speaking, this block is only part of the voltage model). Since E = d/dt ($\psi$), this value of E can be summed with the value of d/dt($\psi_l$) output from the gain matrix 134, in the summing junction 35 to produce d/dt ($\hat{\psi}$). This signal is then supplied to an integrator 136 to produce the flux estimate $\hat{\psi}$. The flux estimate $\hat{\psi}$ is then applied to a comparator 140, together with the flux demand signal $\psi_{ref}$, to produce a flux error signal $\psi_e$ which is applied to control laws 121 to control the switching circuit 120 of Figure 5.

In Figure 6 the voltage model 138 for the flux-creating emf E is derived from the phase voltage, phase current and phase resistance estimate. A thermal model to determine the phase resistance $\hat{R}$ by estimation, or an electrical measurement of phase resistance R can be used or a combination of the two. A convenient form of electrical measurement would be by means of a temperature transducer, such as a thermocouple . Such a transducer will usually need a filter to attenuate noise that would otherwise lead to errors in the measurements.

It will be understood by those skilled in the art that Figure 6 represents a controller for one phase of the machine. If the machine is polyphase, then each phase will essentially have a controller as shown in Figure 6, though in practice there will be some sharing of circuitry for economy.

The closed loop current model-based estimator fixes drift at low and zero speeds, avoiding distortion of the flux estimate by using the current model in place of the voltage model. The P+I gain matrix 134 has a low enough gain and a response characteristic such that the flux estimate based on the current model from the matrix 134 is not influential at high speeds where the voltage model 138 is dominant, whereas the estimator control law function allows the current model to dominate at low speed. Thus, one aspect of the control regime is that the flux estimator hands over between the current model and voltage model control techniques according to machine speed.

The closed loop flux controller will, therefore, have a high "current model gain" at low speed so the current model dominates and a low or zero current model gain at high speed where the voltage model is more suited (if the current model gain is zero, the integrators should be reset at known "zero flux" intervals). The current model (130 of Figure 6) could be a look up table or a functional description in the form of an algorithm. The advantage of the functional description is that it is amenable to adaptation via an adaptive mechanism. The functional description can be linear in the coefficients that change via adaptation. Even without the adaptive mechanism, the system uses both the current and voltage models to estimate flux linkage. If the system is adaptive, at low speed the phase resistance will be corrected, whereas at high speed the "current model" and potentially phase resistance will be corrected. The result is essentially no interaction of the adaptive mechanism with the flux observer.

To summarise: the voltage model becomes less and less accurate as motor speed decreases toward zero because:

- The open loop integration process will experience drift and random walk (uncertainty growing with time as a result of integrating a signal containing noise) for longer intervals between resets.
- At low speed the applied voltage is dropped primarily across the phase resistance which changes with temperature. The effects of the angle varying inductance will be very small at low speeds resulting in a poor signal to noise ratio.
- If a low pass filter is used to approximate an integrator at high speeds, the error between low pass filtering and true integration increases as the motor speed decreases. For zero mean a.c. signals a low pass filter can be used alone. If the signals have a d.c. content there must be a reset function or $k_{obs}$ must have a sufficiently high gain.

At high speed the voltage model is accurate and at the same time very simple. The voltage model is more accurate at higher speeds because:

- The time between resets is much shorter resulting in less drift and random walk.
- At high speeds the voltage is dropped primarily across the angle varying inductance which causes less estimation error due to phase resistance changes.
- In the case of using approximate integration (e.g. a low pass filter) the difference between true integration and low pass filtering becomes negligible at high speed for a.c. signals.

The voltage model is a computation of V- i*R (the flux-causing emf E) from which the flux is derived by reset integration or low pass filtering. All of the complex mutual effects are included in this calculation no matter which phase mmf is driving the flux. A complex look-up table, or calculation of a complex function involving all motor phase currents and rotor position, can be very computationally intensive requiring ever more computing power as the motor speed increases. This is a further reason why the current model may not be used at high speeds. Thus, the voltage model can be used to perform the flux estimate in isolation at high speeds. The voltage model does not use the shaft position to instantaneously estimate flux linkage. The increasingly inaccurate shaft position measurements/estimates with increasing motor speed (calculation delays, signal filtering delays, loss of resolution, etc.) are not of concern to the voltage model.

In situations in which less accurate control of the switched reluctance machine is acceptable, or in which flux control is only required at sufficiently high speeds, it is possible to use only the voltage model and not to apply the current model in controlling flux . However, this does not provide the accuracy at zero and low speeds.

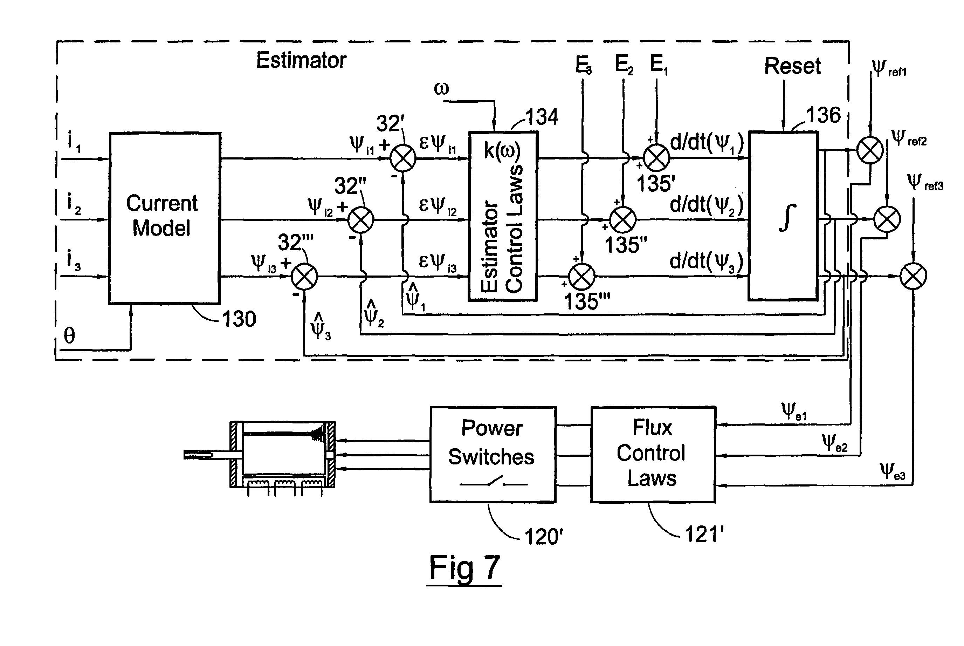

Figure 7 is a more detailed three phase example of the flux control system described in Figure 6. Like reference numerals have been used for equivalent parts in Figures 6 and 7. It will be noted that each phase has separate inputs and outputs in respect of the various values of current, voltage and flux.

The three phase SR example of the embodiment described by Figure 7 includes a closed loop flux observer having the voltage model and the current model 130 of the SR machine phase flux, which predict the flux for each phase as a function of rotor position θ. The respective models are summed into the observer at summing junctions 135', 135" and 135'''.

As stated above, the current model can take many forms, from a look-up table to a functional description of the current in the form of the real-time processed current model. Below are examples of current models that can be used:

Current Model #1 can be presented in the form of a current-product relationship:

$$\psi_{in} = (a_1 i_n + a_2 i_n^2 + a_3 i_n^3 + \ ......)$$

$$+ \ (b_1 i_n + b_2 i_n^2 + b_3 i_n^3 + \ ......) \cos(\theta_{en})$$

$$+ \ (c_1 i_n + c_2 i_n^2 + c_3 i_n^3 + \ ......) \sin(\theta_{en})$$

$$+ \ (d_1 i_n + d_2 i_n^2 + d_3 i_n^3 + \ ......) \cos(2\theta_{en})$$

etc.

Where $\theta$ is the electrical or mechanical angle and n is the phase number. $0 \leq \theta_{en} \leq 2\pi$ for phase n. The mechanical angle is used in the model if electrical sub-harmonics are to be included in the model. At any angle, flux is a function of current. However, the coefficients of such a relationship are dependent upon angle. Such a relationship can be described using the current-product relationship presented above. Mathematically such a relationship is, in the limit, true to arbitrary accuracy due to the nature of the trigonometric and polynomial functions used by virtue of their ability to approximate any continuous function. Electrical sub-harmonics are typically the result of manufacturing variations in a SR machine. The form of Current Model #1 allows each harmonic of a phase flux linkage to change in an arbitrary "smooth" non-linear fashion as a function of that particular phase current. Mutual effects are not considered in Current Model #1.

Current Model #2 uses a hyperbolic tangent form. The generation of flux from current occurs through the physical medium of the motor iron. This material exhibits a relationship between current and flux which can be closely approximated with the hyperbolic tangent function. Such an expansion is also well behaved with respect to out of range values: it exhibits a limiting behaviour. Hence, out of range values for the object variables do not produce abnormal or pathological behaviour in the observer model.

The hyperbolic tangent function may take the form:

$$\psi_{in} = (a_0 i_n + a_1 \tanh(i_n) + a_2 \tanh(2*i_n) + ... + a_p \tanh(p*i_n))$$

$$+ (b_1 \tanh(i_n) + b_2 \tanh(2*i_n) + ... + b_p \tanh(p*i_n)) * \cos(\theta_{en})$$

$$+ (c_1 \tanh(i_n) + c_2 \tanh(2*i_n) + ... + c_p \tanh(p*i_n)) * \sin(\theta_{en})$$

$$+ (d_1 \tanh(i_n) + d_2 \tanh(2*i_n) + ... + d_p \tanh(p*i_n)) * \cos(2\theta_{en})$$

$$+ (e_1) \tanh(i_n) + e_2 \tanh(2*i_n) + ... + e_p \tanh(p*i_n)) * \cos(2\theta_{en})$$

$$+ ...$$

alternatively,

$$\psi_{in} = (a_0 i_n + a_1 \tanh(i_n) + a_2 \tanh(2*i_n) + ... + a_p \tanh(p*i_n))$$

$$+ (b_1 \tanh(i_n) + b_2 \tanh(2*i_n) + ... + b_p \tanh(p*i_n)) * \cos(\theta_{en})$$

$$+ (c_1 \tanh(i_n) + c_2 \tanh(2*i_n) + ... + c_p \tanh(p*i_n)) * \sin(\theta_{en})$$

$$+ (d_1 \tanh(i_n) + d_2 \tanh(2*i_n) + ... + d_p \tanh(p*i_n)) * \cos(2\theta_{en})$$

$$+ (e_1) \tanh(i_n) + e_2 \tanh(2*i_n) + ... + e_p \tanh(p*i_n)) * \cos(2\theta_{en})$$

$$+ ...$$

or any mixture of the above two model forms. The above two model forms do not consider mutual effects.

Conveniently, the complicating factor, the effect of mutual inductance between phases, can be addressed by the use of look-up tables containing measured data or another functional form.

Returning to the $K_{obs}$ observer gain matrix 134 of Figure 6 or 7, it can be any function that ensures that during low and zero speed operation $\varepsilon\psi$ goes to zero as time (t) goes to infinity ($\varepsilon\psi_n$ is the estimation error between the current model estimate of phase flux linkage, $\hat{\psi}_{In}$, and the complete estimate of phase flux linkages, $\hat{\psi}_n$). During high speed operation $K_{obs}$ may be set to zero provided the integrators are reset. The low pass filter option may be used with zero mean AC signals for the flux-causing voltage.

The example for a 3-phase machine shown in Figure 7 is based on the diagonal matrix:

$$\begin{bmatrix} K_1(\omega) & 0 & 0 \\ 0 & K_2(\omega) & 0 \\ 0 & 0 & K_3(\omega) \end{bmatrix}$$

where $K_1$, $K_2$ and $K_3$ are dependent on the angular speed ($\omega$) of the rotor or are constant gains. Constant gains would be used only in a simplified implementation with reduced performance. $K_{obs}$ can be diagonal in this version of the flux observer current model to simplify calculation of $K_{obs}$.

Note that mutual effects are considered in the flux observer models of Figures 6 and 7. The current model 130 estimates each phase flux linkage as a function of every phase current and angle. In addition the total phase (coil) voltage is used by the voltage model portion of the flux observer. The integrator for the or each phase in the voltage model flux observer is reset during known periods of zero (or as near as possible zero) flux in the phase cycle. At high speeds each integrator could also be adapted to act as a low pass filter (with, for example, time constants about 10 times longer than the fundamental frequency of the motor phase switching period) when the supply to the machine has a zero mean a.c. characteristic or a unipolar signal is transformed to a zero mean a.c. representation.

Writing current model #1 in summation form:

$$\psi\_I\_x\_cos(i\_x,\theta,harm\_max,poly\_max) = \sum_{n=0}^{harm\_max} \sum_{m=1}^{poly\_max} L\_x\_i\_cos_{n,m}(i\_x)^m \cos(n\theta) \quad (1)$$

$$\psi\_I\_x\_sin(i\_x,\theta,harm\_max,poly\_max) = \sum_{n=0}^{harm\_max} \sum_{m=1}^{poly\_max} L\_x\_i\_sin_{n,m}(i\_x)^m \sin(n\theta) \quad (2)$$

$$\psi\_X-I\_x\_tot = \psi\_I\_x\_cos(i\_x,\theta,harm\_max,poly\_max) + \psi\_I\_x\_sin(i\_x,\theta,harm\_max,poly\_max) \quad (3)$$

where harm_max is the highest harmonic of the phase flux linkage profile considered and poly_max is the highest polynomial power considered. This is the expression for current model # 1 shown above, but in summation notation.

In a symmetric machine which does not exhibit significant remanence properties due to effects such as lamination grain orientation in the material of the rotor and the stator, $\psi\_I\_x\_tot$ should have only odd polynomial powers.

In other words the self-induced flux linkage should have the same sign as the current that produced it.

The effect of mutual inductance or coupling between the phases, in addition to the phase flux linkage generated by the phase current and its self-inductance, must be considered when determining the total phase flux linkage. The steel of a switched reluctance machine is a non-linear medium for flux. Thus, a general form of model for mutual flux linkage between phases is required. To take the example of a three phase machine, the general form of expression above can be modified to be written as:

$$\psi\_x\_I\_x\_I\_y\_I\_z\_cos(i\_x, i\_y, i\_z, \theta, m\_harm\_max, poly\_x\_max, poly\_y\_max, poly\_max\_z) =$$

$$\sum_{k=0}^{poly\_x\_max} \sum_{m=0}^{poly\_y\_max} \sum_{h=0}^{poly\_max\_z} \sum_{n=0}^{m\_harm\_max} \psi\_x\_i\_x\_i\_y\_i\_z\_cos_{k,m,h,n} i\_x^k i\_y^m i\_z^h \cos(n\theta) \qquad (4)$$

$$\psi\_x\_I\_x\_I\_y\_I\_z\_sin(i\_x, i\_y, i\_z, \theta, m\_harm\_max, poly\_x\_max, poly\_y\_max, poly\_max\_z) =$$

$$\sum_{k=0}^{poly\_x\_max} \sum_{m=0}^{poly\_y\_max} \sum_{h=0}^{poly\_max\_z} \sum_{n=0}^{m\_harm\_max} \psi\_x\_i\_x\_i\_y\_i\_z\_sin_{k,m,h,n} i\_x^k i\_y^m i\_z^h \sin(n\theta) \qquad (5)$$

If no magnets nor any significant remanence effects are present (which is generally the case for the switched reluctance machine):

$$\psi\_x\_I\_x\_I\_y\_I\_z\_cos_{0,0,0,n} = 0 \text{ and } \psi\_x\_I\_x\_I\_y\_I\_z\_sin_{0,0,0,n} = 0 \qquad (6) \ \& \ (7)$$

Thus the total flux linkage in any phase can then be written as:

$$\psi\_x\_tot = \psi\_x\_I\_x\_I\_y\_I\_z\_cos + \psi\_x\_I\_x\_I\_y\_I\_z\_sin \qquad (8)$$

Since equations (4) through (7) include both the mutually induced flux linkages, which may be affected by mmf polarity-dependent magnetic path changes, and the self-induced flux linkages, no generalisation can be made concerning the polynomial exponents as can be made for the self-induced flux linkages in isolation.

Equations (4) and (5) above include both the self-induced flux linkage and the mutually induced flux linkage in a given phase. If the self-induced flux linkage is to be separated from the mutual flux, equations (4) and (5) can be rewritten with different constraints as:

$$m\_x\_I\_x\_I\_y\_I\_z\_cos(i\_x, i\_y, i\_z, \theta, m\_harm\_max, poly\_x\_max, poly\_y\_max, poly\_max\_z) =$$

$$\sum_{k=0}^{poly\_x\_max} \sum_{m=0}^{poly\_y\_max} \sum_{h=0}^{poly\_max\_z} \sum_{n=0}^{m\_harm\_max} m\_x\_i\_x\_i\_y\_i\_z\_cos_{k,m,h,n} i\_x^k i\_y^m i\_z^h cos(n.\theta) \qquad (9)$$

$$m\_x\_I\_x\_I\_y\_I\_z\_cos_{0..poly\_x\_max,0.,0,n} = 0 \qquad (10)$$

$$m\_x\_I\_x\_I\_y\_I\_z\_sin(i\_x, i\_y, i\_z, \theta, m\_harm\_max, poly\_x\_max, poly\_y\_max, poly\_max\_z)$$

$$\sum_{k=0}^{poly\_x\_max} \sum_{m=0}^{poly\_y\_max} \sum_{h=0}^{poly\_max\_z} \sum_{n=0}^{m\_harm\_max} m\_x\_i\_x\_i\_y\_i\_z\_cos_{k,m,h,n} i\_x^k i\_y^m i\_z^h sin(n.\theta) \qquad (11)$$

$$m\_x\_I\_x\_I\_y\_I\_z\_cos_{0..poly\_x\_max,0.,0,n} = 0$$

The total mutually induced flux linkage can then be written as:

$$m\_x\_I\_x\_I\_y\_I\_x\_tot = m\_x\_I\_x\_I\_y\_I\_z\_cos + m\_x\_I\_x\_I\_y\_I\_z\_sin \qquad (12)$$

Equations (9) through (12) include all of the flux linkage generated in phase x that is not due to I_x alone, in other words, all of the mutual inductances. Since equations (9) through (12) describe the mutually induced flux linkages which may be affected by mmf polarity-dependent magnetic path changes, no generalisation can be made concerning the polynomial exponents as can be made for the self-induced flux linkages in isolation.
The total flux linkage in a given phase would then be written as:

$$\psi\_x\_tot(i\_x\_i\_y\_i\_z, \theta) = \psi\_x\_I\_tot + m\_x\_I\_x\_I\_y\_I\_z\_tot \qquad (13)$$

Using equations of the form of (4) through (7) the current dependence of the flux linkages can be generalised as:

$$\psi\_x\_I\_x\_I\_y\_I\_z\_cos(i\_x,i\_y,i\_z,\theta,m\_harm\_max,poly\_x\_max,poly\_y\_max,poly\_max\_z) =$$

$$\sum_{k=0}^{poly\_x\_max} \sum_{m=0}^{poly\_y\_max} \sum_{b=0}^{poly\_max\_z} \sum_{n=0}^{m\_harm\_max} \psi\_x\_i\_x\_i\_y\_i\_z\_cos_{k,m,b,n} f(i\_x^k).f(i\_y^m).f(i\_z^b)\cos(n.\theta) \qquad (14)$$

and

$$\psi\_x\_I\_x\_I\_y\_I\_z\_sin(i\_x,i\_y,i\_z,\theta,m\_harm\_max,poly\_x\_max,poly\_y\_max,poly\_max\_z)=$$

$$\sum_{k=0}^{poly\_x\_max} \sum_{m=0}^{poly\_y\_max} \sum_{b=0}^{poly\_max\_z} \sum_{n=0}^{m\_harm\_max} \psi\_x\_i\_x\_i\_y\_i\_z\_sin_{k,m,b,n} f(i\_x^k).f(i\_y^m).f(i\_z^b)\cos(n.\theta) \qquad (15)$$

If no magnets nor any significant remanence effects are present (which is generally the case for the switched reluctance machine):

$$\psi\_x\_I\_I\_y\_I\_z\_cos_{0,0,0,n}=0 \qquad (16)$$

$$\psi\_x\_I\_I\_y\_I\_z\_sin_{0,0,0,n}=0 \qquad (17)$$

One example of the form of the functions of current seen in equations (14) and (15) is the hyperbolic tangent:

$$f(i\_x^k) = \tanh\left[\left(\frac{i\_x}{norm\_i\_x\_factor}\right)^k\right] \qquad (18)$$

$$f(i\_y^k) = \tanh\left[\left(\frac{i\_y}{norm\_i\_y\_factor}\right)^k\right] \qquad (19)$$

$$f(i\_z^k) = \tanh\left[\left(\frac{i\_z}{norm\_i\_z\_factor}\right)^k\right] \qquad (20)$$

The hyperbolic tangent is just one of a large number of functions that could be chosen. Others include spline descriptions, exponential, etc. The important property of the equations described is that the equations are linear in the coefficients for each poly-harmonic product term (each poly-harmonic term in equations (14) and (15) are linearly de-

pendent on the appropriate $\Psi\_x\_I\_x\_I\_y\_I\_z\_sin\_k\_m\_h$ coefficient). The equations being linear in their coefficients allows for least square parameter estimation. Least squares-based parameter estimation is a well proven method for adapting system models in an embedded application.

The creation of functional descriptions of the system which are linear in coefficients allows for the application of the theory of linear systems, i.e. parameter estimation techniques, which are well understood and reliable.

For the linear magnetic case, equations (14) through (17) reduce to

$$\psi\_x\_I\_x\_I\_y\_I\_z\_cos(i\_x,i\_y,i\_z\theta,m\_harm\_max,poly\_x\_max,poly\_y\_max,poly\_max\_z) =$$

$$\sum_{k=0}^{I} \sum_{m=0}^{I} \sum_{h=0}^{I} \sum_{n=0}^{m\_harm\_max} \lambda\_x\_i\_x\_i\_y\_i\_z\_cos_{k,m,h,n}(i\_x^k).(i\_y^m).(i\_z^h)\cos(n.\theta) \quad (21)$$

$$\psi\_x\_I\_x\_I\_y\_I\_z\_cos(i\_x,i\_y,i\_z\theta,m\_harm\_max,poly\_x\_max,poly\_y\_max,poly\_max\_z) =$$

$$\sum_{k=0}^{I} \sum_{m=0}^{I} \sum_{h=0}^{I} \sum_{n=0}^{m\_harm\_max} \psi\_x\_i\_x\_i\_y\_i\_z\_sin_{k,m,h,n}(i\_x^k).(i\_y^m).(i\_z^h)\sin(n.\theta) \quad (22)$$

If no magnets nor any significant remanence effects are present (generally the case for the switched reluctance machine)

$$\begin{bmatrix} \psi\_x\_I\_x\_I\_y\_I\_z\_\cos_{0,0,0,n} \\ \psi\_x\_I\_x\_I\_y\_I\_z\_\cos_{0,1,1,n} \\ \psi\_x\_I\_x\_I\_y\_I\_z\_\cos_{1,0,1,n} \\ \psi\_x\_I\_x\_I\_y\_I\_z\_\cos_{1,1,0,n} \\ \psi\_x\_I\_x\_I\_y\_I\_z\_\cos_{1,1,1,n} \end{bmatrix} = 0 \quad (23)$$

and:

$$\begin{bmatrix} \psi\_x\_I\_x\_I\_y\_I\_z\_\sin_{0,0,0,n} \\ \psi\_x\_I\_x\_I\_y\_I\_z\_\sin_{0,1,1,n} \\ \psi\_x\_I\_x\_I\_y\_I\_z\_\sin_{1,0,1,n} \\ \psi\_x\_I\_x\_I\_y\_I\_z\_\sin_{1,1,0,n} \\ \psi\_x\_I\_x\_I\_y\_I\_z\_\sin_{1,1,1,n} \end{bmatrix} = 0 \quad (24)$$

Or in simplified form equations (21) through (24) become:

$$\lambda\_x\_I\_x\_I\_y\_I\_z\_cos(i\_x,i\_y,i\_z,\theta,harm\_max\_xx,harm\_max\_xy,harm\_max\_xz) =$$

$$i\_x \sum_{n=0}^{harm\_max\_xx} \lambda\_x\_i\_x_n\cos(n.\theta) + i\_y \sum_{n=0}^{harm\_max\_xy} \lambda\_x\_i\_y_n\cos(n.\theta) + i\_z \sum_{n=0}^{harm\_max\_xz} \lambda\_x\_i\_z_n\cos(n.\theta) \quad (25)$$

$$\lambda\_x\_I\_x\_I\_y\_I\_z\_sin(i\_x,i\_y,i\_z,\theta,harm\_max\_xx,harm\_max\_xy,harm\_max\_xz) =$$

$$i\_x \sum_{n=0}^{harm\_max\_xx} \lambda\_x\_i\_x_n\sin(n.\theta) + i\_y \sum_{n=0}^{harm\_max\_xy} \lambda\_x\_i\_y_n\sin(n.\theta) + i\_z \sum_{n=0}^{harm\_max\_xz} \lambda\_x\_i\_z_n\sin(n.\theta) \quad (26)$$

The total flux linkage can be written as:

$$\lambda\_x\_tot = \lambda\_x\_I\_x\_I\_y\_I\_z\_cos + \lambda\_x\_I\_x\_I\_y\_I\_z\_sin \quad\quad\quad (27)$$

In both the linear and non-linear examples for a three phase SR machine, model forms have been identified that describe the relationship between all three phase currents, angle and phase flux linkage. The expressions described in equations (4) through (27) represent current model forms that describe a three phase SR machine, including mutual effects. The expressions described above in equations (1) through (3) may be used as the current model 130 of Figure 6 and equations (4) through (27) may be used as the current model 130 of Figure 7 The model forms described by equations (1) through (27) are linear in the model coefficients and have been verified in practice. Being linear in the model coefficients allows the model forms described in equations (1) through (27) to be tuned via a Recursive Least Squares-based adaptive mechanism.

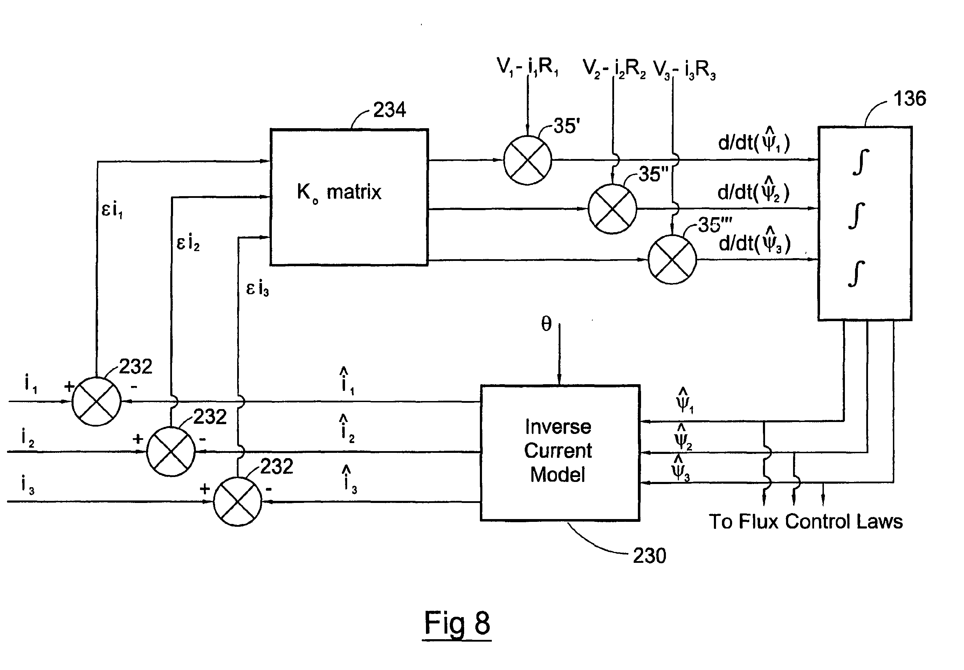

Figure 8 illustrates an alternative flux observer. In this embodiment a matrix $K_o$ 234 is a function of phase currents $i_1$, $i_2$, $i_3$, mechanical rotor angle $\theta$ and rotor angular velocity $\omega$ producing the differential flux estimate output. The flux estimate output of the matrix $K_o$ for each of the three phases is summed with the flux-causing voltage, as before, to derive a value of the rate of change of flux with respect to time $\dfrac{d\hat{\psi}}{dt}$ for each phase. Thus, the integral of this, from integrator 136, will be the flux observer value $\hat{\psi}$ for each phase.

In this embodiment, an inverse current model 230 describes each phase current, $(\hat{\imath}_1, \hat{\imath}_2, \hat{\imath}_3)$, as a function of each phase flux estimate, $(\hat{\psi}_1, \hat{\psi}_2, \hat{\psi}_3)$ and the rotor angle, $\theta$. Values of each phase current are summed with the negative of the output of the inverse current model 230, $(\hat{\imath}_1, \hat{\imath}_2, \hat{\imath}_3)$, in a comparator 232 to produce an error signal $\varepsilon_{i_n}$. The output of the inverse current model 230 is derived from the value of the three observer fluxes $(\hat{\psi}_1, \hat{\psi}_2, \hat{\psi}_3)$ and rotor angle $(\theta)$.

This embodiment uses the inverse of the flux-linkage current model that was described earlier in conjunction with Figures 6 & 7. The inverse current model is needed (phase current estimate as a function of the phase flux or flux linkages and rotor angle) because the measured phase currents are compared with the estimated phase currents as shown in Figure 8. In this form the observer is in the classic Luenberger form (see "An Introduction to Observers", Luenberger, D.G., IEEE Translations on Automatic Control, Vol. AC-16, No. 6, December 1971, pp. 596-602). This flux observer solves the equation:

$$\dot{\hat{\psi}} = V - i(\psi,\theta)R + K_O [i(\psi,\theta)-\hat{\imath}(\hat{\psi},\theta)]$$

where $\hat{\imath}$ is calculated from the inverse flux linkage. $\hat{\dot{\psi}}$, $\hat{\psi}$, $\psi$, $i$, V are all nxl vectors where n is the number of motor phases. The current model observer gain $K_o$ is based on a nxn matrix for an n-phase machine.

From the derivation (not shown) of the observer gain matrix it can be shown that:

$$K_o\,(\theta,\omega,i_1,i_2,i_3) = -\,R_n - K(\omega)\,f\,(i_1,i_2,i_3,\theta)$$

In matrix form:

$$K_o = -\begin{bmatrix} R_n & 0 & 0 \\ 0 & R_n & 0 \\ 0 & 0 & R_n \end{bmatrix} - K(\omega)\begin{bmatrix} f_1(i_1,\theta) & 0 & 0 \\ 0 & f_2(i_2,\theta) & 0 \\ 0 & 0 & f_3(i_3,\theta) \end{bmatrix}$$

ignoring mutual inductance. More generally, in the linear magnetic case where mutual inductance is included:

$$K_o = -\begin{bmatrix} R_n & 0 & 0 \\ 0 & R_n & 0 \\ 0 & 0 & R_n \end{bmatrix} - K(\omega)\begin{bmatrix} f_{11}(\theta) & \mu_{12}(\theta) & \mu_{13}(\theta) \\ \mu_{21}(\theta) & f_{22}(\theta) & \mu_{23}(\theta) \\ \mu_{31}(\theta) & \mu_{32}(\theta) & f_{33}(\theta) \end{bmatrix}\begin{bmatrix} i_1 \\ i_2 \\ i_3 \end{bmatrix}$$

Two other general, non-linear, cases can be similarly defined:

$$K_o = -\begin{bmatrix} R_n & 0 & 0 \\ 0 & R_n & 0 \\ 0 & 0 & R_n \end{bmatrix} - K(\omega)\begin{bmatrix} f_{11}(i_1,\theta) & + & \mu_{123}(i_1,i_2,i_3,\theta) \\ f_{22}(i_2,\theta) & + & \mu_{213}(i_1,i_2,i_3,\theta) \\ f_{33}(i_3,\theta) & + & \mu_{312}(i_1,i_2,i_3,\theta) \end{bmatrix}$$

$$K_o = -\begin{bmatrix} R_n & 0 & 0 \\ 0 & R_n & 0 \\ 0 & 0 & R_n \end{bmatrix} - K(\omega)\begin{bmatrix} \hat{\psi}_a\dfrac{(i_1,i_2,i_3,\theta)}{i_1} \\ \hat{\psi}_b\dfrac{(i_1,i_2,i_3,\theta)}{i_2} \\ \hat{\psi}_c\dfrac{(i_1,i_2,i_3,\theta)}{i_3} \end{bmatrix}$$

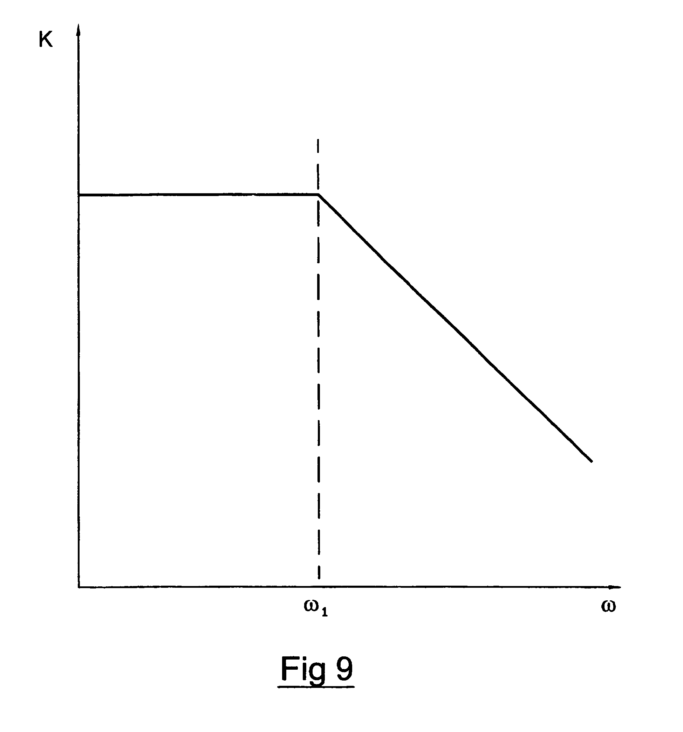

In these expressions mutual inductance is included. It will be appreciated that the form of the expression depends on how the total flux model is defined. The $K(\omega)$ function has a frequency response that is typically similar to that in Figure 9, such that the $K(\omega)$ function dominates at zero and low speeds, but the voltage model dominates with increasing speed. Typically, the response of the current estimator will begin to tail off at about 10% to 20% of base speed, i.e. the highest speed of maximum torque output of the machine.

The invention provides a flux control technique for electronically switched brushless machines of various types, but particularly switched reluctance machines. It produces a real-time signal estimate of the flux in the magnetic circuit of the machine to which a reference value of flux can be compared to control the machine output. Preferred embodiments take account of the differing considerations at high and low speeds by using a current model and a voltage model of the machine flux according to machine speed.

It will be apparent to the skilled person that various modifications and changes can be made to the specifically disclosed embodiments without departing from the invention. The invention is to be limited only by the scope of the following claims.

**Claims**

1. A switched reluctance drive system comprising:

   a switched reluctance machine (36) comprising a rotor (14), a stator (10) having at least one pair of salient stator poles and at least one phase winding (A, B, C), the or each winding being wound around the or each stator pole pair, the or each winding being arranged to establish flux in a magnetic circuit in the machine;
   a flux estimator including:

   means, including a voltage model (138) of the machine arranged to receive inputs of phase voltage (V), phase current (i) and estimated winding resistance (R), for determining the flux-causing voltage across the or each phase winding and producing a feedback signal (E) representing the flux-causing voltage and
   means for deriving from the feedback signal a flux feedback signal ($\hat{\psi}$) proportional to the flux in the or each phase winding; and
   a flux controller (118) having a single input signal ($\psi_D$) representing a flux demand of the machine, which controller is responsive to the input signal and the flux feedback signal ($\hat{\psi}$) to produce control signals for actuating the switch means to control the flux in the at least one phase winding.

2. A system as claimed in claim 1 in which the voltage model includes a thermal model of the or each phase winding.

3. A system as claimed in claim 1 or 2 in which the means for deriving the flux signal include an integrator arranged to integrate the feedback signal to produce the flux signal.

4. A system as claimed in claim 3, in which the estimator includes means for resetting the integrator at a point of substantially zero phase current in the cycle of the or each phase of the machine.

5. A system as claimed in claim 1 in which the means for deriving the flux signal include a low-pass filter arranged to filter the feedback signal to produce the flux signal.

6. A system as claimed in any of claims 1 to 4, in which the estimator includes a current model (130) of the machine arranged to receive the signals representing the phase current and the rotor position and being operable to produce a flux estimate ($\psi_i$) for the or each phase winding therefrom.

7. A system as claimed in claim 6 in which the current model includes an algebraic estimate of the flux in the or each phase winding based on inputs of phase current and rotor position.

8. A system as claimed in claim 6 or 7 in which the estimator includes comparator means for producing a current model error signal from the flux estimate and the feedback signal.

9. A system as claimed in claim 6 in which the current model is an inverse current model (230), including an algebraic estimate of the current in the or each phase winding based on inputs of rotor position and estimated phase flux.

10. A system as claimed in claim 9 in which the estimator includes comparator means for producing an inverse current model error signal from the current estimate and the monitored current in the or each phase winding.

11. A system as claimed in any of claims 6 to 10 in which the estimator further includes means for summing the output of the voltage model and the differentiated output of the current model to produce the feedback signal.

12. A system as claimed in any of claims 6 to 11 in which the estimator further includes a current model controller arranged to apply a control law (134,234) function to the current model output.

13. A system as claimed in claim 12 in which the current model controller has a response to machine speed such that the current model output signal is increasingly attenuated with increasing machine speed above a predetermined machine speed.

14. A system as claimed in any of claims 6 to 12 including means for causing the output of the current model to dominate the output of the voltage model at relatively low machine speeds, and for causing the output of the voltage model to dominate the output of the current model at relatively high machine speeds.

15. A system as claimed in any of claims 1 to 14, the flux controller further including a comparator for comparing the determined flux with the demanded flux to produce the control signals.

16. A method for controlling a switched reluctance machine (36) comprising a rotor (14), a stator (10) having at least one pair of salient stator poles and at least one phase winding (A, B, C), the or each winding being wound around the or each pole pair, the or each winding being arranged to establish flux in a magnetic circuit in the machine, the method comprising:

producing a flux feedback signal ($\hat{\psi}$) including a part indicative of the flux-causing voltage across the or each phase winding including determining the flux-causing voltage using a voltage model (138) of the machine arranged to receive inputs of phase voltage (V), phase current (i) and estimated winding resistance (R); producing a single input signal (42') representing a flux demand of the machine; and controlling energisation of the at least one phase winding in response to the input signal and the flux feedback signal ($\hat{\psi}$).

**Patentansprüche**

1. Geschaltetes Reluktanz-Antriebssystem umfassend:

eine geschaltete Reluktanzmaschine (36) mit einem Rotor (14), einem Stator (10) mit mindestens einem Paar vorstehender Statorpole und mindestens einer Phasenwicklung (A, B, C), wobei die oder jede Wicklung um das oder jedes Statorpolpaar gewickelt ist und die oder jede Wicklung zur Erzeugung eines Kraftflusses in einem Magnetkreis in der Maschine angeordnet ist; einen Kraftflusskalkulator enthaltend:

Mittel, einschließlich eines Spannungsmodells (138) der Maschine, das zum Empfang von Eingaben der Phasenspannung (V), des Phasenstroms (I) und des geschätzten Wicklungswiderstands (R) angeordnet ist, um die den Kraftfluss bewirkende Spannung durch die oder jede Phasenwicklung zu bestimmen und ein für die den Kraftfluss bewirkende Spannung stehendes Feedbacksignal (E) zu erzeugen, und Mittel zum Ableiten eines zum Kraftfluss in der oder jeder Phasenwicklung proportionalen Kraftfluss-Feedbacksignals ($\psi$) aus dem Feedbacksignal; und eine Kraftflusssteuerung (118) mit einem für eine Kraftflussanforderung der Maschine stehenden Eingangssignal ($\psi_D$), welche Steuerung auf das Eingangssignal und das Kraftfluss-Feedbacksignal ($\psi$) reagiert, um Steuersignale zur Betätigung der Schaltmittel zwecks Steuerung des Kraftflusses in der mindestens einen Phasenwicklung zu erzeugen.

2. System nach Anspruch 1, bei dem das Spannungsmodell ein Wärmemodell der oder jeder Phasenwicklung enthält.

3. System nach Anspruch 1 oder 2, bei dem die Mittel zum Ableiten des Kraftflusssignals einen Integrator enthalten, der zur Integration des Feedbacksignals zwecks Erzeugung des Kraftflusssignals angeordnet ist.

4. System nach Anspruch 3, bei dem der Kalkulator Mittel zum Zurücksetzen des Integrators bei Erreichen eines Punktes von im wesentlichen Nullphasenstrom im Zyklus der oder jeder Phase der Maschine enthält.

5. System nach Anspruch 1, bei dem die Mittel zum Ableiten des Kraftflusssignals ein Tiefpassfiler enthalten, das zur Filterung des Feedbacksignals zwecks Erzeugung des Kraftflusssignals angeordnet ist.

6. System nach einem der Ansprüche 1 bis 4, bei dem der Kalkulator ein Strommodell (130) der Maschine enthält, das für dem Empfang der Signale angeordnet ist, die für den Phasenstrom und die Rotorposition stehen, und das zur Erzeugung einer Kraftflussschätzung ($\psi_i$) für die oder jede Phasenwicklung daraus bedienbar ist.

7. System nach Anspruch 6, bei dem das Strommodell eine algebraische Schätzung des Kraftflusses in der oder jeder Phasenwicklung auf Basis von Eingaben des Phasenstroms und der Rotorposition enthält.

8. System nach Anspruch 6 oder 7, bei dem der Kalkulator Komparatormittel zur Erzeugung eines Strommodell-Fehlersignals aus der Kraftflussschätzung und dem Feedbacksignal enthält.

9. System nach Anspruch 6, bei dem das Strommodell ein inverses Strommodell (230) mit einer algebraischen Schätzung des Stroms in der oder jeder Phasenwicklung auf Basis von Eingaben der Rotorposition und des geschätzten Phasenkraftflusses ist.

10. System nach Anspruch 9, bei dem der Kalkulator Komparatormittel zur Erzeugung eines inversen Strommodell-Fehlersignals aus der Stromschätzung und dem überwachten Strom in der oder jeder Phasenwicklung enthält.

11. System nach einem der Ansprüche 6 bis 10, bei dem der Kalkulator weiters Mittel zur Summierung der Ausgabe des Spannungsmodells und der differenzierten Ausgabe des Strommodells zur Erzeugung des Feedbacksignals enthält.

12. System nach einem der Ansprüche 6 bis 11, bei dem der Kalkulator weiters eine Strommodellsteuerung enthält, die zur Anlegung einer Reglerfunktion (134, 234) an die Strommodellausgabe angeordnet ist.

13. System nach Anspruch 12, bei dem die Strommodellsteuerung eine Reaktion auf die Maschinengeschwindigkeit derart hat, dass das Strommodell-Ausgabesignal mit zunehmender Maschinengeschwindigkeit über eine vorherbestimmte Maschinengschwindigkeit zunehmend abgeschwächt wird.

14. System nach einem der Ansprüche 6 bis 12 mit Mitteln, die bewirken, dass bei relativ niedrigen Maschinengeschwindigkeiten die Ausgabe des Strommodells über die Ausgabe des Spannungsmodells dominiert und bei relativ hohen Maschinengeschwindigkeiten die Ausgabe des Spannungsmodells über die Ausgabe des Strommodells dominiert.

15. System nach einem der Ansprüche 1 bis 14, wobei die Kraftflusssteuerung weiters einen Komparator zum Vergleichen des ermittelten Kraftflusses mit dem angeforderten Kraftfluss zwecks Erzeugung der Steuersignale enthält.

16. Verfahren zum Steuern einer geschalteten Reluktanzmaschine (36) mit einem Rotor (14), einem Stator (10) mit mindestens einem Paar vorstehender Statorpole und mindestens einer Phasenwicklung (A, B, C), wobei die oder jede Wicklung um das oder jedes Statorpolpaar gewickelt ist und die oder jede Wicklung zur Erzeugung eines Kraftflusses in einem Magnetkreis in der Maschine angeordnet ist, welches Verfahren umfasst:

Erzeugen eines Kraftfluss-Feedbacksignals ($\psi$) mit einem die den Kraftfluss bewirkende Spannung durch die oder jede Phasenwicklung anzeigenden Teil einschließlich des Bestimmens der den Kraftfluss bewirkenden Spannung unter Verwendung eines Spannungsmodells (138) der Maschine, das zum Empfangen von Eingaben der Phasenspannung (V), des Phasenstroms (I) und des geschätzten Wicklungswiderstands (R) angeordnet ist; Erzeugen eines einzelnen für eine Kraftflussanforderung der Maschine stehenden Eingangssignal (42'); und Steuern der Erregung der mindestens einen Phasenwicklung in Reaktion auf das Eingabesignal und das Kraftfluss-Feedbacksignal ($\psi$).

**Revendications**

1. Système de commande d'une machine à reluctance commutée, comprenant:

une machine à reluctance commutée (36) comprenant un rotor (14), un stator (10) comprenant au moins une paire de pôles de stator saillants et au moins un enroulement de phase (A, B, C), l'enroulement ou chaque enroulement étant enroulé autour de la paire ou de chaque paire de pôles de stator, l'enroulement ou chaque enroulement étant agencé pour établir un flux dans un circuit magnétique dans la machine; un estimateur de flux, comprenant:

des moyens, comprenant un modèle de tension (138) de la machine, agencés pour recevoir des entrées de tension de phase (V), de courant de phase (i) et une résistance d'enroulement estimée (R), pour déterminer la tension générant le flux aux bornes de l'enroulement de phase ou de chaque enroulement de phase, et pour produire un signal de rétroaction (E) représentant la tension générant le flux; et

des moyens pour dériver à partir du signal de rétroaction un signal de rétroaction de flux ($\hat{\psi}$) proportionnel au flux dans l'enroulement de phase ou dans chaque enroulement de phase; et

un dispositif de commande de flux (118) comprenant un signal d'entrée unique ($\psi_D$) représentant une demande de flux de la machine, ledit dispositif de commande étant sensible au signal d'entrée et au signal de rétroaction de flux ($\hat{\psi}$) pour produire des signaux de commande pour actionner les moyens de commutation pour commander le flux dans ledit au moins un enroulement de phase.

2. Système selon la revendication 1, dans lequel le modèle-de tension comprend un modèle thermique de l'enroulement de phase ou de chaque enroulement de phase.

3. Système selon la revendication 1 ou 2, dans lequel les moyens pour dériver le signal de flux comprennent un intégrateur agencé pour intégrer le signal de rétroaction pour produire le signal de flux.

4. Système selon la revendication 3, dans lequel l'estimateur comprend des moyens pour remettre à zéro l'intégrateur en un point de courant de phase essentiellement nul pendant le cycle de l'enroulement de phase ou de chaque enroulement de phase de la machine.

5. Système selon la revendication 1, dans lequel les moyens pour dériver le signal de flux comprennent un filtre passe-bas agencé pour filtrer le signal de rétroaction pour produire le signal de flux.

6. Système selon l'une quelconque des revendications 1 à 4, dans lequel l'estimateur comprend un modèle de courant (130) de la machine agencé pour recevoir les signaux représentant le courant de phase et la position de rotor et pouvant être activé pour produire une estimation de flux ($\psi_i$) pour l'enroulement de phase ou chaque enroulement de phase.

7. Système selon la revendication 6, dans lequel le modèle de courant comprend une estimation algébrique du flux dans l'enroulement de phase ou dans chaque enroulement de phase basé sur des entrées de courant de phase et de la position du rotor.

8. Système selon l'une quelconque des revendications 6 ou 7, dans lequel l'estimateur comprend des moyens de comparaison pour produire un signal d'erreur de modèle de courant à partir de l'estimation de flux et du signal de rétroaction.

9. Système selon la revendication 6, dans lequel le modèle de courant est un modèle de courant inverse (230), comprenant une estimation algébrique du courant dans l'enroulement de phase ou dans chaque enroulement de phase basée sur des entrées de la position du rotor et du flux de phase estimé.

10. Système selon la revendication 9, dans lequel l'estimateur comprend des moyens de comparaison pour produire un signal d'erreur de modèle de courant inverse à partir de l'estimation de courant et du courant surveillé dans l'enroulement de phase ou dans chaque enroulement de phase.

11. Système selon l'une quelconque des revendications 6 à 10, dans lequel l'estimateur comprend en outre des moyens pour additionner la sortie du modèle de tension et la sortie différentielle du modèle de courant pour produire le signal de rétroaction.

12. Système selon l'une quelconque des revendications 6 à 11, dans lequel l'estimateur comprend en outre un dispositif de commande de modèle de courant agencé pour appliquer une loi de commande (134, 234) à la sortie de modèle de courant.

13. Système selon la revendication 12, dans lequel le dispositif de commande de modèle de courant réagit à la vitesse de la machine de telle sorte que le signal de sortie de modèle de courant soit atténué de façon croissante avec une augmentation de la vitesse de la machine au-dessus d'une vitesse prédéterminée de la machine.

14. Système selon l'une quelconque des revendications 6 à 12, comprenant des moyens pour faire en sorte que la sortie du modèle de courant domine la sortie du modèle de tension à des vitesses relativement basses de la machine, et pour faire en sorte que la sortie du modèle de tension domine la sortie du modèle de courant à des vitesses de la machine relativement élevées.

**15.** Système selon l'une quelconque des revendications 1 à 14, dans lequel le dispositif de commande de flux comprend en outre un comparateur pour comparer le flux déterminé avec le flux demandé pour produire les signaux de commande.

**16.** Procédé de commande d'une machine à reluctance commutée (36) comprenant un rotor (14), un stator (10) comprenant au moins une paire de pôles de stator saillants et au moins un enroulement de phase (A, B, C), l'enroulement ou chaque enroulement étant enroulé autour de la paire ou de chaque paire de pôles de stator, l'enroulement ou chaque enroulement étant agencé pour établir un flux dans un circuit magnétique dans la machine, le procédé comprenant:

la production d'un signal de rétroaction de flux ($\hat{\psi}$) comprenant une partie indicative de la tension générant le flux aux bornes de l'enroulement de phase ou de chaque enroulement de phase, comprenant la détermination de la tension générant le flux en utilisant un modèle de tension (138) de la machine agencé pour recevoir des entrées de tension de phase (V), de courant de phase (i) et de résistance d'enroulement estimée (R);

la production d'un signal d'entrée unique (42') représentant une demande de flux de la machine; et

la commande de l'excitation d'au moins un enroulement de phase en réponse au signal d'entrée et au signal de rétroaction de flux ($\hat{\psi}$).

## Fig 1
### Prior Art

Controller

## Fig 2
### Prior Art

**Fig 3**

## Fig 4

## Fig 5

Fig 6

Fig 7

Fig 8

EP 1 109 308 B1

## Fig 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0573198 A

**Non-patent literature cited in the description**

- **STEPHENSON ; BLAKE.** The Characteristics, Design and Applications of Switched Reluctance Motors and Drives. *PCIM '93 Conference and Exhibition,* 21 June 1993
- **P.G. BARRASS ; B.C. MECROW.** Torque Control of Switched Reluctance Drives. *ICEM'96 Proceedings, International Conference on Electrical Machines,* 10 September 1996, vol. 1, 254-259

- **VAGATI et al.** IEEE Transactions on Industry Applications. IEEE Inc, 01 July 1997, vol. 33, 983-991
- **FRATTA et al.** IEEE Transactions on Industry Applications. IEEE Inc, 01 July 1992, vol. 28, 873-879
- **LUENBERGER, D.G.** An Introduction to Observers. *IEEE Translations on Automatic Control,* December 1971, vol. AC-16, 596-602